# EUROPÄISCHE PATENTSCHRIFT

(11) **EP 1 354 968 B1**
(45) Veröffentlichungstag und Bekanntmachung des Hinweises auf die Patenterteilung: **08.07.2009**
(21) Anmeldenummer: 03007731.7
(22) Anmeldetag: 04.04.2003
(51) Int. Cl.: C22B 7/00, C22B 34/36, C22B 3/02, C25C 5/00, C25C 7/00, C25C 7/02, C25C 5/02, C25B 11/03

(54) **Verfahren zur elektrochemischen Auflösung von Pulvern aus hochschmelzenden Sonderlegierungen und dafür geeignete Elektrolysezelle**
Process for electrochemical dissolution of high-melting point special alloy powders and electrolytic cell suitable therefor
Procédé de dissolution électrochimique de poudres d'alliages spéciaux à point de fusion élevé et cellule d'électrolyse à cet effet

(30) Priorität: 17.04.2002 DE 10216944
(43) Veröffentlichungstag der Anmeldung: 22.10.2003
(73) Patentinhaber: H.C. Starck GmbH, 38642 Goslar (DE)
(72) Erfinder: Olbrich, Armin, Dr., 38723 Seesen (DE); Meese-Marktscheffel, Juliane, Dr., 38642 Goslar (DE); Gille, Gerhard, Dr., 38640 Goslar (DE); Stoller, Viktor, 38667 Bad Harzburg (DE); Mathy, Wolfgang, 38685 Langelsheim (DE)
(74) Vertreter: Clauswitz, Kai-Uwe Wolfram

(56) Entgegenhaltungen:
- DD-A- 142 896
- DE-A- 2 650 474
- GB-A- 1 565 181
- RU-C- 2 039 710
- SU-A- 1 057 432
- US-A- 3 972 795
- US-A- 4 597 842
- DATABASE WPI Section Ch, Derwent Publications Ltd., London, GB; Class M28, AN 1973-19152U XP002256229 & SU 324 877 A (AMOSOV VM LUTSKII VK TELN)
- DATABASE WPI Section Ch, Week 199347 Derwent Publications Ltd., London, GB; Class M24, AN 1993-376114 XP002256231 & SU 1 774 958 A (DON FERR METAL), 7. November 1992 (1992-11-07)
- DATABASE WPI Section Ch, Week 197652 Derwent Publications Ltd., London, GB; Class M28, AN 1976-97707X XP002256234 & SU 510 535 A (PAVLOVSKII V A), 31. Mai 1976 (1976-05-31)

## Beschreibung

Die vorliegende Erfindung betrifft ein Verfahren zum elektrolytischen Aufschluss von pulverförmigen Vorstoffen, insbesondere hochschmelzenden Legierungen wie Rhenium-Wolfram-Legierungen, Rhenium-Molybdän-Legierungen, Rhenium-Molybdän-Wolfram-Legierungen, Superlegierungen und edelmetallhaltigen Legierungssystemen, insbesondere zur Rückgewinnung der darin enthaltenen Wertstoffe wie Rhenium, Tantal, Hafnium und Platin. Derartige Vorstoffe für die Wiedergewinnung von Wertstoffen fallen bei der Verarbeitung entsprechender Legierungen, aber auch bei der Schrottzerkleinerung gebrauchter Maschinenteile aus derartigen Legierungen an.

Für die Rückgewinnung von Wertmetallen aus diesen Legierungsschrotten wurden eine Reihe von oxidativen metallurgischen und hydrometallurgischen Verfahren entwickelt, die jedoch überwiegend den Nachteil eines hohen Energieverbrauchs (z.B. Rösten bei hohen Temperaturen) aufweisen und/oder den Einsatz umweltbelastender Reagenzien erfordern.

Einen guten Überblick über die verschiedenen Möglichkeiten der Aufarbeitung bieten die Veröffentlichungen Kenworthy et al., "Experimental Extraction of Strategic Components ...", Report of Investigations 5786, United States Department of the Interior, Bureau of Mines, 1976, und K. Vadasdi, "Effluent Free Manufacture of Ammonium Paratungstate (APT) by Recycling the Byproducts", Int. J. of Refractory Metals & Hard Materials 13 (1995) 45-59.

Darüber hinaus wurden auch bereits elektrolytische Verfahren zum Aufschluss der Legierungen entwickelt, die in den genannten Veröffentlichungen ebenfalls angesprochen sind. Aus energetischen und ökologischen Gründen sind elektrolytische Verfahren den anderen Verfahren im allgemeinen vorzuziehen.

SU-A-1 057 432 offenbart einen Elektrokoagulator, der ein Gehäuse aus einem dielektrischen Material, eine Schüttanode, die aus Spänen besteht, eine freistehende perforierte Kathode, die darüber auf einem dielektrischen Netz gelegen ist, sowie eine anodische Stromversorgung umfasst, dadurch gekennzeichnet, dass, um den Stromverbrauch für die Reinigung durch Reduktion des Anodenwiderstands zu senken, die anodische Stromversorgung in einer Zone angeordnet ist, in welcher die aus Spänen bestehende Anode eine anodische Auflösung erfährt, und die Anode so gestaltet ist, dass einige spitze Stäbe, die aus unlöslichem leitenden Material gefertigt und mittels dielektrischer Halterungen an der Kathode befestigt sind, vorhanden sind.

RU-C-2 039 710 offenbart einen Elektrokoagulator für die elektrochemische Trennung von flüssigen Mitteln, Suspensionen und die Spaltung von Emulsionen. Der Elektrokoagulator beinhaltet ein Gehäuse aus einem dielektrischen Werkstoff, eine Schüttanode, ein Netz aus einem dielektrischen Material, einen perforierten, horizontal liegenden Anodenstromleiter und eine Kathode in Form eines Netzes aus stromleitenden Fäden. Die Kathode ist mit dem dielektrischen Netz verbunden und bildet ein biegsames zweischichtiges Gewebe. Die Fläche des zweischichtigen Gewebes ist 1,5 bis 2,5-mal größer als die des Anodenstromleiters.

SU-A-324 877 offenbart ein Verfahren, bei dem Wolframschrott, der Verunreinigungen enthält, wie zum Beispiel La, Y und Th, einer anodischen Auflösung unterzogen wird, um reines Wolfram zu gewinnen. Das Schrottmaterial, zum Beispiel ein brikettierter Draht oder ein gepresstes Pulver, wird als Anode in einem Elektrolyten suspendiert, der auf einer 15 bis 25%igen wässrigen Lösung von Ammoniak beruht und 5 bis 15 g/l Ammoniumnitrat oder Ammoniumchlorid enthält. Die anodische Auflösung erfolgt mit einer Anodenstromdichte von 0,05 bis 0,3 A/cm², einer Kathodenstromdichte von 0,05 bis 0,5 A/cm², und einer Elektrolyttemperatur von 15 bis 25 °C.

Die gesättigte Lösung enthält 240 bis 300 g/l Wolfram als WO₃. Verunreinigungen, die sich nicht in der Lösung auflösen, werden durch Filtration entfernt. Nach der Verdampfung der Lösung werden die erhaltenen Ammoniumparawolframat-Kristalle auf 450 bis 600°C erhitzt, um Wolframtrioxid WO₃ zu ergeben. Daraus kann nach bekannten Verfahren Wolfram-Metall erhalten werden.

SU-A-1 774 958 offenbart einen Elektrolysator, der ein Gehäuse, eine perforierte Anode, die in einem anodischen Behälter befestigt ist, in Form einer abnehmbaren Halterung mit einer Positionierungs-Vorrichtung, wobei die Anode aus einem elektrisch leitenden Material hergestellt ist, eine perforierte Kathode, die so angebracht ist, dass der Abstand zwischen den Elektroden reguliert werden kann, Stromführungen, Leitungen für die Zufuhr und Entnahme des Elektrolyten, ein Steuerungs- und Kühlungssystem umfasst.

Die Vorrichtung besitzt eine zylindrische Wanne, die mit einem Abstand zum Boden des Korpus befestigt ist und in ihrem oberen Teil Löcher aufweist, und eine Turbine. Der Anodenbehälter ist am Boden der Schale positioniert und ist perforiert. Die Kathode ist in einer Aussparung der Wannenwand angeordnet. Um den Ausstoß zu erhöhen, sind die Schaufeln der Turbine auf der Höhe der Löcher in der Wanne angeordnet, und der Anodenbehälter besteht aus einer abnehmbaren Halterung. Die Vorrichtung ist nützlich bei der Behandlung von Schrotten aus Refraktärmetallen und ihrer Legierungen durch anodische Auflösung, und insbesondere für die Entfernung von Molybdän-Kernen aus Wolfram-Wendeln bei der Herstellung elektrischer Glühlampen.

SU-A-510 535 offenbart einen Elektrolysator zur kontinuierlichen Aufarbeitung von Schrotten aus Refraktärmetallen durch anodische Auflösung. Der Elektrolysator besitzt eine Spindel, die in einen elektrisch isolierten Bügel gegliedert ist. Der untere Teil der Kathode liegt in der Form eines Sektors vor, und die Perforation des unteren Teils der Kathode verstärkt den Abgasstrom aus der Reaktionszone.

Der obere Teil der Kathode bildet den Träger und besitzt Einschnitte zur Befestigung der Spindel, während die Anode in Form einer angeflanschten Trommel vorliegt, in welche das Anodenmaterial aus einem Fülltrichter gefüllt wird. Der Schlamm wird durch ein Entnahmerohr entnommen und in einen Absetztank geführt; der geklärte Elektrolyt wird der Reaktionszone zugeführt. Die Strömungsrichtung wird umgekehrt, um eine optimale Konzentration des gelösten Metalls zu erhalten, und der verbrauchte Elektrolyt wird zu einer hydrometallurgischen Anlage abgeleitet. Das Verfahren verhindert einen Kurzschluss.

DE-A-26 50 474 offenbart ein Verfahren zur Regenerierung gebrauchter Aktivkohle und insbesondere ein Verfahren zum Regenerieren und Behandeln der gebrauchten Aktivkohle, bei dem die gebrauchte Aktivkohle durch Anwendung eines direkten elektrischen Stromdurchganges erhitzt wird.

US-A-4 597 842 offenbart ein Verfahren zur elektrolytischen Wiedergewinnung von Metallen und eine Vorrichtung zur Entfernung des Metalls aus einer Lösung mit einem geringen Metallgehalt, indem eine Zelle zur Wiedergewinnung des Metalls eingesetzt wird, bei der ein Bett aus Metall auf einem perforierten Bauteil oberhalb des Bodens der Zelle angeordnet ist, und die Kathode der Zelle sich in das Bett erstreckt, um eine im Wesentlichen unbegrenzte Kathodenfläche bereitzustellen, durch welche die behandelte Lösung vor ihrer Entfernung aus der Zelle gefiltert wird.

Die Vorteile der elektrolytischen Aufschlussvarianten von Schrotten liegen allgemein in der eleganten schlanken Prozessführung, die bei Stromausbeuten um 100 % niedrige Prozesskosten sichert und unter Umweltgesichtspunkten die bessere Wahl darstellt.

Der große Nachteil der Elektrolyseverfahren wird dann offensichtlich, wenn Schrotte aufgeschlossen werden sollen, die in Pulverform vorliegen, typischerweise mit Partikelgrößen unter 1000 µm, beispielsweise mit mittleren Partikelgrößen von 10 bis 500 µm, bevorzugt bis 200 µm, unter Einschluss von Teilchengrößen bis herab zu 1 µm. Neben dem grundsätzlichen Problem der Handhabung derartiger Pulver in einer Elektrolysezelle, z.B. der Kontaktierung eines Pulverteilchens mit der Anode, tritt insbesondere das weitere Problem auf, dass derartige Pulver zur oberflächlichen Passivierung neigen, die zum fast vollständigen Erliegen der anodischen Oxidationsprozesse führt. Es kommt innerhalb kurzer Elektrolysezeiten zu einem unwirtschaftlich hohen Anstieg der Elektrolysespannung und dadurch bedingt zur Wasserzersetzung. Während derartigen Passivierungseffekten bei der Elektrolyse von großstückigem Schrott durch geeignete Maßnahmen der pH-Wert-Einstellung, der Elektrolytzusammensetzung und der Stromumpolung begegnet werden kann, (J. Electrochem. Soc. India, 1986, 35-2, 127), gewinnen in Pulverschüttungen Grenzschichteffekte mit starken pH-Wert-Gradienten aufgrund zu geringer Elektrolytbewegung die Oberhand und bringen die gewünschte Reaktion zum Erliegen.

Der vorliegenden Erfindung lag die Aufgabenstellung zugrunde, unter Beachtung wirtschaftlicher Aspekte, ein elektrolytisches Verfahren zum Aufschluss von Pulvern und eine für die Elektrolyse von Pulvern geeignete Elektrolysezelle zur Verfügung zu stellen.

Gegenstand der Erfindung ist ein Verfahren zum elektrochemischen Aufschluss von pulverförmigen Vorstoffen durch Einbringen einer Pulverschüttung zwischen zwei flüssigkeitsdurchlässige Elektroden einer Elektrolysezelle, das dadurch gekennzeichnet ist, dass die Elektroden horizontal angeordnet sind und der Elektrodenabstand durch die Höhe der Pulverschüttung bestimmt ist, die Kathodenplatte gegen die Pulverschüttung durch einen Separator isoliert ist und in dem Gehäuse vertikal beweglich montiert ist, die Pulverschüttung von dem Elektrolyten senkrecht zu den Elektrodenflächen durchströmt wird, der Elektrolyt durch die Pulverschüttung umgepumpt oder durchgesaugt wird und zur Aufrechterhaltung einer wirksamen Solezusammensetzung partiell aus dem Umpumpkreislauf ausgeschleust und durch frischen Elektrolyten ersetzt wird, und wobei die Zelle zumindest auf der Sole-Abströmseite eine Anordnung aufweist, die aus einer Stütz-Lochplatte, einer mit Perforationen versehenen Elektrodenplatte und einem zwischen Stütz-Lochplatte und Anodenplatte angeordneten Filtertuch besteht.

Vorzugsweise liegt die Pulverschüttung zur Gewährleistung des elektrischen Kontaktes zur Anode auf der Anodenplatte auf bzw. an. Zur Vermeidung eines Kurzschlusses ist die Kathodenplatte gegen die Pulverschüttung durch einen Separator isoliert. Als Separator ist ein gegen den Elektrolyten beständiges Gewebe beispielsweise auf PTFE-Basis (Polytetrafluorethylen-Basis) oder eine perforierte Platte bzw. Folie aus Elektrolyt-beständigem Material geeignet.

Nach einer Ausführungsform der Erfindung wird die Elektrolysezelle von dem Elektrolyten von der Kathode zur Anode durchströmt, wobei die Pulverschüttung zusätzlich zur Schwerkraft durch den aufgrund des Strömungswiderstandes erforderlichen Flüssigkeitsdruck gegen die Anode gedrückt wird.

Die Pulverschüttung kann durch das Eigengewicht der Elektrodenplatte bzw. durch zusätzliche, auf die Elektrodenplatte ausgeübte Kräfte Druck zur Gewährleistung des elektrischen Kontaktes zur Anodenplatte und zwischen den Pulverteilchen der Schüttung auf die Schüttung ausüben, wobei ein Kurzschluss durch den zellseitig an der Kathode angeordneten Separator verhindert wird.

Im Falle der Ausbildung der Zelle mit vertikal beweglicher Kathode ist der Elektrodenabstand durch die im Laufe der Durchführung des elektrochemischen Aufschlusses abnehmende Höhe der Pulverschüttung bestimmt. Bevorzugt ist eine anfängliche Höhe der Pulverschüttung von 1 bis 50 cm.

Wenn der Elektrodenabstand auf weniger als 10 % abgesunken ist, wird die Zelle geöffnet und erneut mit einer Pulverschüttung gefüllt.

Nach einer weiteren Ausführungsform der Erfindung weist die Elektrolysezelle mit horizontalen Elektroden einen festen Elektrodenabstand auf, wobei das aufzuschließende Pulver periodisch oder kontinuierlich in dem Elektrolyten dispergiert wird und durch die perforierte zustromseitige Elektrode mittels einer isolierten Rohrzuführung in die Zelle eingeleitet wird. Dies erlaubt eine kontinuierliche Arbeitsweise. Nach einer weiteren Ausführungsform der Erfindung weist die Zelle mit horizontalen Elektroden eine vertikal bewegliche Elektrode auf, mittels der Druck auf die Pulverschüttung ausgeübt wird, wobei diskontinuierlich, beispielsweise alle 10 bis 50 Stunden der Elektrodenabstand vergrößert wird und mittels Dispergierung in dem Elektrolyten durch die perforierte zustromseitige Elektrode nachgefüllt und anschließend die vertikal bewegliche Elektrode auf die aufgestockte Pulverschüttung aufgelegt wird.

Vorzugsweise wird die Elektrolysezelle mit horizontalen Elektroden von dem Elektrolyten von oben nach unten durchströmt. Ebenfalls bevorzugt ist die untere Elektrode die Anode, die abströmseitig ein durch einen Lochboden gehaltenes Filtertuch aufweist.

Die Auswahl des Elektrolyten erfolgt in Abhängigkeit von der aufzuschließenden Pulverzusammensetzung.

Besteht das Legierungspulver im wesentlichen aus in wässrigem alkalischem Medium lösliche Alkalimetallate bildenden Metallen, insbesondere Wolfram, Molybdän und/oder Rhenium und deren Legierungen, wird als Elektrolyt vorzugsweise eine wässrige Alkalihydroxidlösung eingesetzt. Vorzugsweise wird eine Alkalihydroxidkonzentration von mindestens 0,1 Mol pro Liter aufrechterhalten. Insbesondere bevorzugt soll die Alkalihydroxidkonzentration 1 bis 6 Mol pro Liter betragen. Im Falle, dass als aufzuschließende Pulver Superlegierungspulver auf Basis der Hauptlegierungskomponenten Nickel, Kobalt und/oder Chrom, insbesondere solche, die darüber hinaus noch Werkstoffkomponenten wie Hf, Ta, Nb, Mo, W, Re und/oder Platin-Metalle enthalten, eingesetzt werden, wird als Elektrolyt vorzugsweise eine wässrige anorganische Säure, bevorzugt Salzsäure eingesetzt.

Gegenstand der vorliegenden Erfindung ist ferner eine Elektrolysezelle, bestehend aus einem elektrisch isolierenden Gehäuse und zwei in dem Gehäuse angeordneten, flüssigkeitsdurchlässigen Elektroden, wobei zumindest eine der Elektroden eine Struktur aufweist, die aus einer Stütz-Lochplatte, einer mit Perforation versehenen Elektrodenplatte und einem zwischen Stütz-Lochplatte und Elektrodenplatte angeordneten Filtertuch besteht, und die Kathode mittels eines aus nicht leitendem Material bestehenden, flüssigkeitsdurchlässigen Separator gegen das Zelleninnere abgeschirmt ist, wobei ferner kathodenseitig eine Verteilkammer für den Elektrolyten und anodenseitig eine Sammelkammer für den Elektrolyten, eine außerhalb der Zelle geführte Rezirkulationsleitung zwischen Sammelkammer und Verteilkammer, Mittel zur Förderung des Elektrolyten durch die Rezirkulationsleitung von der Sammelkammer zur Verteilkammer vorgesehen sind, sowie ein externer Wärmetauscher in der Rezirkulationsleitung zwischengeschaltet sein kann, der wahlweise im Heiz- oder Kühlregime betrieben werden kann.

Vorzugsweise sind die Elektroden der Elektrolysezelle horizontal übereinander mit Abstand angeordnet, wobei die Anode die untere Elektrode und die Kathode die obere Elektrode bildet. Weiter bevorzugt ist die Kathode in dem Gehäuse vertikal beweglich angeordnet.

In der Verteilkammer, der Sammelleitung und/oder der Rezirkulationsleitung sind Mittel zur partiellen Ausschleusung von Elektrolysesole und zur Einspeisung von frischem Elektrolyten vorgesehen. Ferner weist die Verteilkammer Mittel zum Abzug von elektrolytisch erzeugten Gasen, insbesondere Wasserstoff, auf.

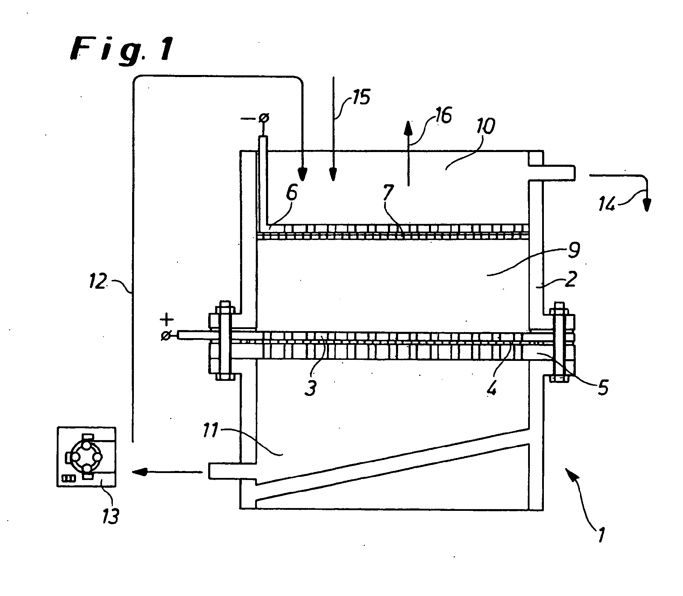

Die Erfindung wird anhand der nachfolgenden Figur 1 näher erläutert:

Fig. 1 zeigt eine erfindungsgemäße Elektrolysezelle 1, die aus einem elektrisch isolierenden Gehäuse 2 besteht, in dem eine horizontal angeordnete, mit Perforationen versehene Anode 3 angeordnet ist. Gegen die Anode 3 liegt ein Filtertuch 4 an, das mittels einer Loch-Stützplatte 5 gegen die Anode 3 gehalten wird. Die Kathode 6, die auf ihrer der Anode 3 zugewandten Seite einen Separator 7 aufweist, ist innerhalb des Zellengehäuses 2 vertikal beweglich angeordnet. Der Abstand zwischen Anode 3 und Kathode 6 wird durch die Höhe der Pulverschüttung 9 zwischen den Elektroden bestimmt. Oberhalb der Kathode 6 befindet sich die Verteilkammer 10 für den Elektrolyten. Unterhalb der Anode 3 befindet sich die Sammelkammer 11 für die Elektrolysesole. Die Sole wird über die Rezirkulationsleitung 12 mittels schematisch angedeuteter Schlauchpumpe 13 umgepumpt. Wahlweise kann ein unter vermindertem Druck (Vakuum) betriebener Vorlagebehälter vorgeschaltet sein, aus dem mit einer geeigneten Pumpe füllstandsgeregelt der Elektrolyt der Zelle wieder zugeführt werden kann. Ein Teil der Elektrolysesole wird über 14 kontinuierlich oder periodisch ausgeschleust und durch frischen Elektrolyten, wie durch Pfeil 15 angedeutet, ersetzt. Aus der Verteilkammer 10, die hier offen gezeichnet ist, entweicht ferner an der Kathode 6 erzeugter Wasserstoff 16. Eine weitere Ausführungsform zum Betreiben der erfindungsgemäßen Zelle besteht darin, den Elektrolyten von unten gegen die Anode aufwärts anströmen zu lassen und den Elektrolyten dann vorzugsweise über einen freien Überlauf oberhalb der Kathode der Zelle zu entnehmen und in den Kreislauf zurückzuführen.

### Beispiel 1

In einer erfindungsgemäßen Elektrolyseapparatur gemäß Fig. 1 mit einer kreisförmigen Bodenfläche von 154 cm² werden 3059 g pulverförmiger Re/W-Schrott (3 % Re, 97 % W, mittlere Teilchengröße etwa 100 um) auf eine als Anode geschaltete perforierte Metallplatte (z.B. Ni) aufgeschüttet, die Oberfläche des Pulvers erst mit einem Separatur und dann mit einer kathodisch geschalteten, ebenfalls perforierten, vertikal beweglichen und sich selbst durch ihr Eigengewicht absenkenden Metallplatte abgedeckt. Unter die anodische Metallplatte ist ein Filtertuch gespannt, das seinerseits zur Stabilisation auf einem Lochboden aufliegt. Diese Grundapparatur vereinigt in sich sowohl die Funktion einer Elektrolysezelle als auch die Funktion einer Filternutsche, im Folgenden als Einheit als Filtrationselektrolysezelle bezeichnet. Die Filtrationselektrolysezelle ist mit einem internen Kreislauf versehen, bei dem mittels einer Pumpe der alkalische Elektrolyt mit einem Zirkulationsvolumen von 40 ml/h · cm² durch das Pulverbrett gesogen wird. Zwischen Anode und Kathode wird ein Gleichstrom auf 20 A geregelt eingestellt und über 125 h elektrolysiert. Während der Elektrolyse liegt die Spannung im Bereich von 2.8 V (Anfang) - 3.1 V (Ende), wobei sich eine Elektrolysetemperatur von 30 bis 35°C einstellt. Stündlich werden 210 ml einer 100 g/l haltigen Natronlauge-Lösung in das Elektrolysesystem zudosiert und ca. 210 ml Produktlauge (105 g/l W und 3,5 g/l Re) über einen Überlauf abgetrennt. Nach Beendigung der Elektrolyse wird der verbliebene Zelleninhalt gewaschen, getrocknet und gewogen: es ergibt sich eine aufgelöste Pulverschrottmenge von 2845 g, was einer Faradayschen Stromausbeute von 100 % entspricht. Der Energieverbrauch pro kg aufgelöstem Pulverschrott liegt abhängig von der Spannung zwischen 2.46 bis 2.72 kWh.

## Patentansprüche

1. Verfahren zum elektrochemischen Aufschluss von pulverförmigen Vorstoffen durch Einbringung einer Pulverschüttung zwischen zwei flüssigkeitsdurchlässige Elektroden einer Elektrolysezelle
**dadurch gekennzeichnet, dass**
die Elektroden horizontal angeordnet sind und der Elektrodenabstand durch die Höhe der Pulverschüttung bestimmt ist, die Kathodenplatte gegen die Pulverschüttung durch einen Separator isoliert ist und in dem Gehäuse vertikal beweglich montiert ist, die Pulverschüttung von dem Elektrolyten senkrecht zu den Elektrodenflächen durchströmt wird, der Elektrolyt durch die Pulverschüttung umgepumpt oder durchgesaugt wird und zur Aufrechterhaltung einer wirksamen Solezusammensetzung partiell aus dem Umpumpkreislauf ausgeschleust und durch frischen Elektrolyten ersetzt wird, und wobei die Zelle zumindest auf der Sole-Abströmseite eine Anordnung aufweist, die aus einer Stütz-Lochplatte, einer mit Perforationen versehenen Elektrodenplatte und einem zwischen Stütz-Lochplatte und Anodenplatte angeordneten Filtertuch besteht.

2. Verfahren nach Anspruch 1, **dadurch gekennzeichnet, dass** die Pulverschüttung zur Herstellung des elektrischen Kontaktes zur Anode durch das Eigengewicht der Kathode gegen die Anode gedrückt wird.

3. Verfahren nach einem der Ansprüche 1 oder 2, **dadurch gekennzeichnet, dass** die Pulverschüttung aus in wässrigem alkalischem Medium lösliche Alkalimetallate bildenden Metallen, insbesondere W, Mo, Re und deren Legierungen besteht und als Elektrolyt eine wässrige Alkalihydroxidlösung eingesetzt wird.

4. Verfahren nach Anspruch 3, **dadurch gekennzeichnet, dass** in der Elektrolysesole eine Alkalihydroxidkonzentration von mindestens 0,1 Mol/l aufrechterhalten wird.

5. Verfahren nach Anspruch 4, **dadurch gekennzeichnet, dass** der wässrige alkalische Elektrolyt eine Alkalihydroxidkonzentration von 1 bis 6 Mol/l aufweist.

6. Verfahren nach einem der Ansprüche 3 bis 5, **dadurch gekennzeichnet, dass** der alkalische Elektrolyt von der Kathode zur Anode strömt.

7. Verfahren nach einem der Ansprüche 1 bis 6, **dadurch gekennzeichnet, dass** die Pulverschüttung aus Superlegierungen, insbesondere solchen mit den Hauptlegierungsbestandteilen Ni, Co und/oder Cr, insbesondere solchen, die darüber hinaus noch Wertkomponenten wie Hf, Ta, Nb, Mo, W, Re und/oder Platin-Metalle enthalten, besteht und als Elektrolyt eine wässrige anorganische Säure eingesetzt wird.

8. Elektrolysezelle (1), bestehend aus einem elektrisch isolierenden Gehäuse (2) und zwei parallelen flüssigkeitsdurchlässigen Elektroden (3 und 6), wobei zumindest eine Elektrode (3) eine Struktur aufweist, die aus einer Stütz-Lochplatte (5), einer mit Perforationen versehenen Elektrodenplatte (3) und einem zwischen Stütz-Lochplatte (5) und Elektrodenplatte (3) angeordneten Filtertuch (4) besteht, die Kathodenstruktur (6) gegen die Zelle mittels eines flüssigkeitsdurchlässigen Separators (7) aus elektrisch isolierendem Material gegen die Zelle abgeschirmt ist, wobei kathodenseitig eine Verteilerkammer (10) für den Elektrolyten und anodenseitig eine Sammelkammer (11) für den Elektrolyten, eine außerhalb der Zelle angeordnete Rezirkulationsleitung (12) und Mittel zur Förderung des Elektrolyten (13) zurück von der Sammelkammer (11) zur Verteilerkammer (10) vorgesehen sind, und wobei in der Verteilerkammer (10), der Sammelleitung und/oder in der Rezirkulationsleitung (12) Mittel zur partiellen Ausschleusung (14) von Elektrolysesole und zur Einspeisung (15) von frischem Elektrolyten vorgesehen sind.

9. Elektrolysezelle nach Anspruch 8, wobei die Elektroden horizontal übereinander angeordnet sind, die Anode die untere Elektrode bildet und die Kathode in dem Gehäuse derart vertikal beweglich angeordnet ist, dass der Elektrodenabstand durch die Höhe der Feststofffüllung zwischen den Elektroden bestimmt ist.

10. Elektrolysezelle nach einem der Ansprüche 8 oder 9, wobei in der Verteilerkammer Mittel zum Abzug von Wasserstoff vorgesehen sind.

## Claims

1. Process for the electrochemical decomposition of precursors in powder form by introducing a powder batch between two liquid-permeable electrodes of an electrolysis cell, **characterized in that** the electrodes are arranged horizontally and the electrode spacing is determined by the height of the powder batch, the cathode plate is insulated from the powder batch by a separator and is fitted so as to be vertically mobile in the housing, the electrolyte flows through the powder batch perpendicularly to the electrode surfaces, the electrolyte is pumped or sucked through the powder batch, and, in order to maintain an effective brine composition, some of it is removed from the pumping circuit and replaced by a fresh electrolyte, and the cell having, at least on the brine outflow side, an arrangement which consists of a supporting pierced plate, an electrode plate provided with perforations, and a filter cloth arranged between the supporting pierced plate and the anode plate.

2. Process according to Claim 1, **characterized in that** the powder batch is pressed against the anode by the weight of the cathode in order to make the electrical contact with the anode.

3. Process according to either of Claims 1 and 2, **characterized in that** the powder batch consists of metals that form alkali metallates which are soluble in an aqueous alkaline medium, in particular W, Mo, Re and their alloys, and an aqueous alkali hydroxide solution is used as the electrolyte.

4. Process according to Claim 3, **characterized in that** an alkali hydroxide concentration of at least 0.1 mol/l is maintained in the electrolysis brine.

5. Process according to Claim 4, **characterized in that** the aqueous alkaline electrolyte has an alkali hydroxide concentration of from 1 to 6 mol/l.

6. Process according to one of Claims 3 to 5, **characterized in that** alkaline electrolyte flows from the cathode to the anode.

7. Process according to one of Claims 1 to 6, **characterized in that** the powder batch consists of superalloys, in particular those having the major alloy constituents Ni, Co and/or Cr, in particular those which furthermore contain valuable components such as Hf, Ta, Nb, Mo, W, Re and/or platinum group metals, and an aqueous inorganic acid is used as the electrolyte.

8. Electrolysis cell (1), consisting of an electrically insulating housing (2) and two parallel liquid-permeable electrodes (3 and 6), at least one electrode (3) having a structure which consists of a supporting pierced plate (5), an electrode plate (3) provided with perforations, and a filter cloth (4) arranged between the supporting pierced plate (5) and the electrode plate (3), the cathode structure (6) being shielded from the cell by means of a liquid-permeable separator (7) made of electrically insulating material, a distributor chamber (10) for the electrolyte being provided on the cathode side and a collection chamber (11) for the electrolyte being provided on the anode side, a recirculation line (12) arranged outside the cell being provided, and means being provided for feeding the electrolyte (13) back from the collection chamber (11) to the distribution chamber (10), and means for removing (14) some of the electrolysis brine and for supplying (15) fresh electrolyte being provided in the distributor chamber (10), the collection line and/or in the recirculation line (12).

9. Electrolysis cell according to Claim 8, the electrodes being arranged horizontally above one another, the anode forming the lower electrode, and the cathode being arranged vertically mobile in the housing such that the electrode spacing is determined by the height of the solid-material filling between the electrodes.

10. Electrolysis cell according to either of Claims 8 and 9, means for drawing off hydrogen being provided in the distributor chamber.

## Revendications

1. Procédé pour la préparation électrochimique de précurseurs sous forme de poudre, par l'introduction d'une poudre en vrac entre deux électrodes perméables d'une cellule d'électrolyse,
**caractérisé en ce que**
les électrodes sont disposées horizontalement et l'espacement entre les électrodes est déterminé par la hauteur de la poudre en vrac, la plaque de cathode est isolée de la poudre en vrac par un séparateur et montée de façon verticalement mobile dans le boîtier, la poudre en vrac est transportée verticalement de l'électrolyte vers les surfaces d'électrodes, l'électrolyte est pompé et aspiré à travers la poudre en vrac, évacué partiellement du circuit de pompage pour le maintien d'une composition active de saumure et remplacé par un nouvel électrolyte, la cellule comportant, au moins du côté de l'écoulement de la saumure, un ensemble constitué d'une plaque de support perforée, d'une plaque d'électrode pourvue de perforations et d'une toile de filtrage disposée entre la plaque perforée de support et des plaques d'anodes.

2. Procédé selon la revendication 1, **caractérisé en ce que** la poudre en vrac est pressée contre l'anode pour la réalisation d'un contact électrique avec l'anode sous l'effet de son propre poids.

3. Procédé selon l'une des revendications 1 ou 2, **caractérisé en ce que** la poudre en vrac est constituée de métaux formant des métaux alcalins solubles dans un fluide aqueux alcalin, en particulier W, Mo, Re et leurs alliages, et **en ce que** l'électrolyte utilisé est une solution aqueuse d'hydroxyde alcalin.

4. Procédé selon la revendication 3, **caractérisé en ce qu'**une concentration d'hydroxyde alcalin d'au moins 0,1 Mol/l est maintenue dans la saumure d'électrolyse.

5. Procédé selon la revendication 4, **caractérisé en ce que** l'électrolyte alcalin aqueux comporte une concentration d'hydroxyde alcalin de 1 à 6 Mol/l.

6. Procédé selon l'une des revendications 3 à 5, **caractérisé en ce que** l'électrolyte alcalin s'écoule de la cathode vers l'anode.

7. Procédé selon l'une des revendications 1 à 6, **caractérisé en ce que** la poudre en vrac est constituée de superalliages, en particulier de ceux contenant les composants principaux d'alliage Ni, Co et/ou Cr, en particulier de ceux contenant en outre des composants de valeur tels que Hf, Ta, Nb, Mo, W, Re et/ou des platinoïdes, et **en ce que** l'électrolyte utilisé est un acide inorganique aqueux.

8. Cellule d'électrolyte (1) constituée d'un boîtier électriquement isolant (2) et de deux électrodes parallèles perméables (3 et 6), au moins l'une des électrodes (3) comportant une structure constituée d'une plaque de support perforée (5), d'une plaque d'électrode (3) pourvue de perforations et d'une toile de filtrage (4) disposée entre la plaque de support perforée (5) et la plaque d'électrode (3), la structure de cathode (6) étant isolée de la cellule au moyen d'un séparateur perméable (7) constitué d'un matériau électriquement isolant, dans lequel il est prévu une chambre de répartiteur (10) située côté cathode pour l'électrolyte, une chambre de collecte (11) située côté anode pour l'électrolyte, une conduite de recirculation (12) disposée à l'extérieur de la cellule et des moyens pour le transport de l'électrolyte (13) de la chambre de collecte (11) vers la chambre de répartiteur (10), et dans lequel des moyens sont prévus dans la chambre de répartiteur (10), la conduite de collecte et/ou la conduite de recirculation (12), pour l'évacuation partielle (14) de la saumure d'électrolyte et pour l'apport (15) de nouveaux électrolytes.

9. Cellule d'électrolyte selon la revendication 8, dans laquelle les électrodes sont disposées horizontalement les unes sur les autres, l'anode forme l'électrode du dessous, et la cathode est disposée dans le boîtier de façon verticalement mobile, de façon à ce que l'espacement entre les électrodes soit déterminé par la hauteur de la matière solide en vrac entre les électrodes.

10. Cellule d'électrolyte selon l'une des revendications 8 ou 9, dans laquelle des moyens sont prévus dans la chambre de répartiteur, pour l'évacuation d'hydrogène.
